(19) [European Patent Office logo] Europäisches Patentamt / European Patent Office / Office européen des brevets

(11) **EP 2 499 785 B1**

(12) **EUROPEAN PATENT SPECIFICATION**

(45) Date of publication and mention
of the grant of the patent:
**01.01.2014 Bulletin 2014/01**

(51) Int Cl.:
*H04L 12/26* [(2006.01)]  *H04L 12/24* [(2006.01)]
*H04L 12/28* [(2006.01)]

(21) Application number: **10781866.8**

(22) Date of filing: **12.11.2010**

(86) International application number:
**PCT/EP2010/067360**

(87) International publication number:
**WO 2011/058126 (19.05.2011 Gazette 2011/20)**

(54) **METHOD FOR PREDICTING THE DATA RATE IN ACCESSES ON AN ASYMMETRIC DIGITAL SUBSCRIBER LINE**

VERFAHREN ZUR VORHERSAGE DER DATENRATE BEI ZUGÄNGEN EINER ASYMMETRISCHEN DIGITALEN TEILNEHMERLEITUNG

PROCÉDÉ PERMETTANT DE PRÉDIRE LE DÉBIT DE DONNÉES DANS DES ACCÈS SUR UNE LIGNE D'ABONNÉ NUMÉRIQUE ASYMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2009 ES 200930988**

(43) Date of publication of application:
**19.09.2012 Bulletin 2012/38**

(73) Proprietor: **Telefónica, S.A.**
**28013 Madrid (ES)**

(72) Inventor: **SANCHEZ YANGÜELA, Manuel**
**E-28013 Madrid (ES)**

(74) Representative: **Carpintero Lopez, Francisco et al**
**Herrero & Asociados, S.L.**
**Alcalá, 35**
**28014 Madrid (ES)**

(56) References cited:
**EP-A1- 1 248 383**   **US-A1- 2005 123 027**
**US-A1- 2007 025 548**   **US-A1- 2008 089 485**

- **PATRICK BOETS ET AL: "SINGLE-ENDED LINE TESTING - A WHITE BOX APPROACH", PROCEEDINGS OF THE 4TH IASTED INTERNATIONAL MULTI-CONFERENCE. WIRELESS AND OPTICAL COMMUNICATIONS,, [Online] 8 July 2004 (2004-07-08), pages 1-6, XP007916748, Retrieved from the Internet: URL: http://wwwtw.vub.ac.be/elec/Papers%20o n%20web/Papers/ Boets/CSA2004%20Banff%20Can ada.pdf> [retrieved on 2011-01-14]**
- **TOM BOSTOEN ET AL: "Estimation of the Transfer Function of a Subscriber Loop by Means of a One-Port Scattering Parameter Measurement at the Central Office", IEEE JOURNAL ON SELECTED AREAS IN COMMUNICATIONS, IEEE SERVICE CENTER, PISCATAWAY, US, vol. 20, no. 5, 1 June 2002 (2002-06-01), XP011065489, ISSN: 0733-8716**

**Description**

Field of the Invention

The invention relates to the field of fixed broadband telecommunications, specifically to broadband accesses supported by the subscriber loop, the metal wire pair, typically a copper wire pair, which connects the telephone in the user's home with the telephone exchange. The invention relates more specifically to a method for determining the topology of the subscriber loop (number of sections integrating it and open circuit branches that may exist, referred to as bridged taps), the detection of faults and the calculation of the access speed that the loop can provide using different types of asymmetric digital subscriber lines (ADSL or Asymmetric Digital Subscriber Line, ADSL2+ or Asymmetric Digital Subscriber Line - Extended bandwidth and VDSL2 or Very high bit rate Digital Subscriber Line 2), referred to hereinafter as xDSLs.

Background of the Invention

Both in the telecommunication operators and providers industry, it is necessary to calculate, beforehand and with reduced operational costs, the performance that a metal pair should provide when said pair is to be used to provide broadband access based on xDSL multicarrier technologies (ADSL or UIT-T G.992.1, ADSL2 or UIT-T G.992.3, ADSL2+ or UIT-T G.992.5 y VDSL2 or UIT-T G.993.2). Said metal pair is indistinctly given the terms "loop" and "access loop" throughout this document.

To calculate said performance it is necessary to specify the topology of said metal pair: segments (metal pair sections characterised by a gauge of the wires and the insulation of said wires) integrating it, the length thereof and the possible presence of bridged taps or branches (metal pair sections connected parallel to the loop, finished in open circuit) and the length thereof. It is likewise necessary to identify beforehand the faults preventing the use of the metal pair for a broadband access based on xDSL.

Several prior art documents relate to solutions based on reflectometry which implement xDSL chipsets, for example documents EP1842292 (granted to Centillium Communications), US2008089485 (granted to Conexant Systems Inc), US2007013384 (granted to Alcatel-Lucent) and US20020089337 (granted to Harris Corporation).

Said documents relate to methods for measuring, in asymmetric digital subscriber line modems, the reflection coefficient by means of the excitation of the loop and the measurement of the echo corresponding to said excitation generated by the loop.

The calculation of the performance which can be expected from a metal pair when it is used for broadband accesses on xDSL is necessary to determine the offer of broadband services which can be marketed to each potential client.

In principle, this calculation is simple for an incumbent telecommunications operator since it has plant records (records in which the topology of each loop is specified in a detailed manner) of the metal pair access network which it has previously deployed. In principle, with this information, the performance which can be expected can be calculated beforehand. However, these processes are proving to be very unreliable for two reasons:

- The effect derived from a good or bad condition of preservation of the pairs, which translates into a degradation of its electric features, such as for example the increase of the resistance of the wires of the pair and the loss of insulation between the wires of the pair, is not contemplated.
- These plant records also do not take into account the negative effect on the access speed derived from the crosstalk (interference) introduced by the progressive increase of the number of metal pairs supporting xDSL accesses of the incumbent or third party operator through Local Loop Unbundling or LLU.

In the case of an incoming operator, which offers broadband services based on xDSL by renting out loops to the incumbent operator, the difficulties are much greater since it does not have any information. The only information which it receives is provided by the incumbent operator, in accordance with the standards established by the regulator. Said information is in turn subject to the limitations previously indicated and which may involve margins of error of up to 50% in some cases.

A proposed solution is to take measures in the two ends of the loop, however said solution cannot be carried out due to the time limits and the operational costs that it entails. Therefore, there is still a need in the art for a  quick, simple and inexpensive method for predicting the performance of a metal pair which is to be used to provide broadband access.

Another existing alternative solution for predicting the performance of a loop for broadband access is disclosed in EP 1248383, which uses an excitation signal inputted at one point (or port) of the access network in order to compute a reflectogram. A 1-port parametric model of the network is generated and optimized by reducing the difference between the results from the reflectometry measurements and results obtained from the 1-port parametric model and the excitation signal. Thus, a 2-port parametric model of the network is generated using the optimized parameter values.

Summary of the Invention

The present invention relates to a method for predicting the performance of the metal pair (or loop) for broadband accesses from reflectometry measurements taken from a single point of the access network, specifically from the telephone exchange. The prediction of performance is understood as the estimation of the raw data rate which said loop can support. Said method can be carried out from the raw data provided by the DSLAM, as well as from the data already prepared by management and configuration tools. This capability allows the integration under a single platform of equipment and solutions of a different origin, allowing a multivendor access network for the operator.
The method comprises:

- Measuring a reflection coefficient of the loop to be characterised, preferably by means of a DSLAM used as a single point of access
- Determining a topology of the loop from the reflection coefficient.
- Estimating a raw data rate of the loop, using to that end a generalisation of the Shannon formula described in detail herein;
- Estimating a net data rate of the loop from the topology and from the raw data rate, deducting the headers of the messages from said raw data rate according to the calculated topology.

These and other aspects of the invention will be evident in view of the description detailed thereof.

Brief Description of the Drawings

The present invention will be better understood with reference to the following drawings which illustrate preferred embodiments of the invention, provided by way of example, and which by no means must be interpreted as limiting the invention.

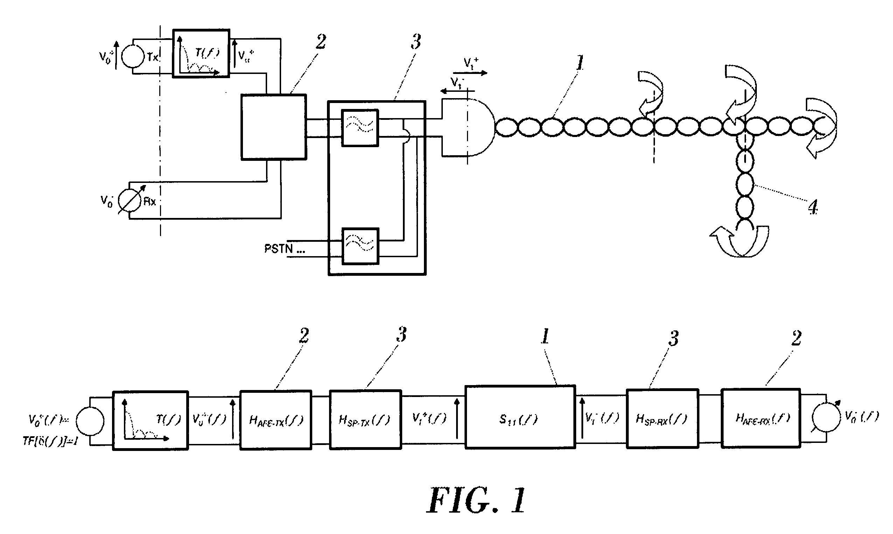

Figure 1 illustrates the technical basis for the method of the present invention for processing the data supplied by the xDSL modems.

Detailed Description of Preferred Embodiments

According to the present invention, from the results provided by the previously mentioned devices and equipment already known in the art, and using loop and noise models, the topology and possible faults of the loop are determined and the possible performance (speed in bit/s in the user -> network (upward) and the network -> user (downward) direction) which can be offered is calculated, furthermore taking into account other parameters typical of broadband services on an asymmetric digital subscriber line such as the delay and the impulse noise protection (INP).
The method according the present invention allows, from the reflectometry measurements taken from a single point of the access network (for example, the telephone exchange), calculating beforehand which pairs of the network are faulty (short circuits) and which are suitable for a determined type of broadband service requiring a determined data rate, providing a calculation of the maximum net access speed which can be marketed. The method of the present invention further allows working from different types of data, whether such data are provided by the digital subscriber line access multiplexer (DSLAM) or by the management and configuration tools developed by the DSLAM providers themselves; and, from the data provided by the DSLAM, the loop topology, the faults (open circuit loops) and the maximum net data rate which can be provided by the loop with a determined type of xDSL access are calculated. This capacity allows the integration under a single platform of equipment and solutions of a different origin, allowing a multivendor access network for the operator.
The data of the measurements taken by the xDSL modems installed in the DSLAMs deployed in local exchanges, on which the method of the present invention is based, can be, for example, the reflection coefficient (ratio between the voltage received and the voltage sent for each frequency) and the noise power measured by the xDSL modem.
The method of the present invention allows:

• Calculating if the loop is suitable (finished in open circuit), is faulty (finished in short circuit) or if it is already connected to a CPE (Customer Premise Equipment) with a WAN xDSL interface.
• Calculating the total length of the loop,
• Determining the existence of bridged taps and the possible number thereof.
• Determining the position of the bridged taps throughout the loop.

- Estimating the length of said bridged taps.
- Estimating the maximum net data rate for a determined type of xDSL access, and for determined delay and impulse noise protection parameters.

Figure 1 describes the theoretical basis of the method of the present invention according to a first embodiment, in which the estimation is made from the physical layer measurements, the raw measurement of the reflection coefficient taken by the DSLAM. This figure explains the way in which the modem of a DSLAM installed in an exchange generates and receives reflectometric measurement signals. This mechanism must be known in order to deduct its effect when processing the raw measurements provided by the DSLAM provides, in the event that the DSLAM provider makes these measurements accessible.

As can be seen in said Figure 1, $S_{11}$ exclusively refers to the reflection of loop 1, whereas $\rho_E$(f) refers to that same reflection coefficient in an uncalibrated measurement (i.e., it would be the measurement provided by the DSLAM for example). This notation has been maintained in the rest of this document. Expressed according to the voltages involved:

$$\rho_E(f) \;=\; \frac{V_0^-(f)}{V_0^+(f)}\;; \qquad S_{11}(f) \;=\; \frac{V_1^-(f)}{V_1^+(f)}$$

The present invention contemplates two types of input data, corresponding to the two possible embodiments thereof:

- From physical layer data, i.e., raw data.
- From data prepared by the management and configuration tools of the DSLAM itself.

In the event of working with raw data, the method according to the present invention comprises:

- Deducting the effect of the analogue front end (AFE) circuit 2 used by xDSEL (ADSL, ADSL2+ or VDSL2) modems installed in the DSLAM.
- Deducting the effect of the exchange splitter 3
- Deducting the effect of the pulses used in the measurements thereof by the DSLAM, and which each manufacturer will configure in its own way (for example, Dirac pulses, random frequency tone sequences , rectangular pulses, Gaussian pulses, Rayleigh pulses, Gaussian monocycles or Gaussian doublets).

To that end, the DSLAM measures the echo V0-(f) at an injected signal V0+(f).

$$V_0^-(f) = V_0^+(f)\cdot T(f)\cdot H_{AFE-TX}(f)\cdot H_{SP-TX}(f)\cdot \rho_E(f)\cdot H_{SP-RX}(f)\cdot H_{AFE-RX}(f)$$

The frequency response of the AFE ($H_{AFE-TX}$(f), $H_{AFE-RX}$(f), referring to transmission and reception respectively) and of the exchange splitter ($H_{SPTX}$(f), $H_{SP-RX}$(f), referring to transmission and reception respectively) is obtained by means of a calibration, measuring the uncalibrated parameter $S_{11}$ (reflection coefficient) of a special loop, a loop of 0 metres in open circuit, i.e., measuring the uncalibrated parameter $S_{11}$ of a DSLAM port, already connected to the exchange splitter, in open circuit, not connected to any loop the real reflection coefficient $\rho_E$(f) of which is equal to 1 for all the frequencies (f). That stored measurement allows estimating the response of the AFE and of the exchange splitter, and thus deducting the effect of the AFE and of the exchange splitter in the measurements of the loops.

The pulse is compensated by applying different patterns, represented in the previous expression by the frequency response T(), which correspond with the standardised frequency responses of different pulse types which can be used in reflectometric measurements (pure tones without pulse shaping, rectangular pulses, Gaussian pulses, Rayleigh pulses, Gaussian doublets,..). The type of compensation is determined previously, in a calibration phase, every time new access equipment (i.e., xDSL line cards for the DSLAMs of the operator) is incorporated to the plant of the operator.

From the measurement provided by the DSLAM, and after the effects introduced by the different elements present in the modem of the DSLAM (AFE, exchange splitter and shaping of the pulses used) have been deducted, a debugged datum $S_{11}$(f) (shown in Figure 1) is obtained, the analysis of which allows determining whether or not the loop is faulty, and if it is not, it allows obtaining a calculation of the topology of the loop, as well as the performance (access speed) which can be expected from said loop if it is used for a determined type of xDSL access.

To determine the topology of the loop, from the measurement of the reflection coefficient of the modulus of $S_{11}$, the local minimums of that function can be located, the position relative to the frequency of which allows estimating the length of the bridged tap 4, according to the expression

$$\beta(f) \cdot L_{RM} = \pi$$

Where $L_{RM}$ is the length of the bridged tap, and where $\beta(f)$ is the phase function of the loop of the frequency at which the minimum is detected. In other words, the length of the bridged tap is estimated from those frequencies at which the modulus of the reflection coefficient measured, with the effects of pulses, AFE and exchange splitter being corrected, show a local minimum, making the electric length at that frequency equal to $\pi$ radians.

The length of the loop, as well as the position of the bridged taps throughout the loop is estimated from the reflection coefficient ($\rho_E(f)$), once the effect of the frequency response of the AFE and of the pulse type used has been deducted from the measured reflection coefficient $S_{11}$. To that end, the Inverse Fast Fourier Transform ($TF^{-1}[\rho_E(f)]$) is calculated through IFFT (Inverse Fast Fourier Transform) and that measurement provides the echoes associated with the injected signal in the time domain. The moment in which the echoes are received allows estimating the length of the loop and the position of the bridged taps in relation to the length of the loop. The last echo is the one that corresponds to the end of the loop.

$$v_1^-(t) = TF^{-1}[\rho_E]$$

From the measurement of the reflection coefficient, of the modulus of $S_{11}$, the local minimums of that function can be located, the position relative to the frequency of which allows estimating the length of the bridged tap.

In this step, points of the loop with faults can be detected by means of identifying a termination of the loop in short circuit, instead of in open circuit, which entails a variation in the pattern of the phase of the measured parameter $S_{11}$.

Once the topology of the loop, i.e., its length as well as the position and length of the bridged taps of said loop, has been estimated, its transfer function can be estimated. And from said transfer function, the signal-to-noise ratio at the user end can be estimated, with which datum the throughout which can be provided on the mentioned loop can be calculated.

The raw data rate of the loop ($R_{RAW}$) is estimated as:

$$R_{RAW}(bit/s) = 4000 \cdot \sum_{i=1}^{N_{sc}} \log_2\left(1 + G_{COD} \cdot \frac{S/N}{NM \cdot \Gamma}\right)$$

The expression is a generalisation of the Shannon formula (C. E. Shannon: A mathematical theory of communication. Bell System Technical Journal, vol. 27, pp. 379-423 and 623-656, July and October, 1948) to all the carriers used in an OFDM (Orthogonal Frequency Division Multiplexing) modulation such as that of xDSL access systems, where:

- 4000 is the speed in symbols per second used in each subcarrier.
- $N_{SC}$ is the number of subcarriers, which varies with the type of xDSL access which is to be deployed by the operator in the loop object of analysis.
- S/N is the signal-to-noise ratio in reception, in times, not in logarithmic units. The signal power transmitted by each subcarrier is known, given that PSD (Power Spectral Density) or PSD of the different types of xDSL access are known and are included in the different UIT standards. The power of the signal received can be estimated from the previous datum and from the estimation of the transfer function of the loop. And the DSLAM measures the noise power per subcarrier. If that measurement is not available, an estimation can be made from the background noise levels with which the operator normally works (typically the different operators apply values of -140 dBm/Hz, -132 dBm/Hz or even 120 dBm/Hz) plus the PSD of interference noise associated with the number of xDSL systems that will coexist in a loop, a datum which can be calculated from expressions such as the ones included in the standards (see reference [2, corresponding to G.996.1)
- NM is the noise margin, a parameter established by the operator as a margin in the event of possible fluctuations of the noise level. This parameter is typically 6 dB, although the one considered suitable by the operator can be established in order to give more or less guarantees, and in the expression it is used in times, not in logarithmic units.

- $G_{COD}$ is the resulting coding gain, such as Trellis, used by the xDSL access systems, typically about 4.2 dB. This datum is used in the expression in times, not in logarithmic units.

- r is the so-called Shannon Gap, which is established at 10 dB (9.75 dB) for the QAM modulations of each one of the subcarriers used in xDSL. This datum has to be converted from logarithmic units to times for its use in the previous expression.

Finally, from the raw data rate obtained, and according to the transmission delay and the impulse noise protection to be used by the operator (included in the INP or Impulse Noise Protection parameter) and applying the expressions for estimating the frame structure which depend on the delay (T) and the INP included in the UIT-T G.992.1, G.992.3, G.992.5 and G.993.2 standards, the overhead is removed due to the frame structure implemented for those delay and INP objectives, and the estimated raw data rate ($R_{NET}$(bit/s)) is obtained.

Approximately, and as included in the mentioned standards:

The effect $R_{NET}\left(bit/s\right) \approx R_{RAW}\left(bit/s\right) \cdot \left(1 + \dfrac{2 \cdot INP}{T\left(ms\right) \cdot f_s\left(Ksymbols/s\right)}\right)$ of the presence of bridged taps is included in the estimation of the frequency response of the loop, made from the estimation of its length, and from the position and length of the bridged taps.

Therefore, by means of the method according to the present invention, an incoming operator can estimate beforehand, simply and inexpensively, the commercial offer of broadband services that can be offered to each client, as well as a monitoring of possible problems in the event that anomalies are detected, without depending on the information of the incumbent operator in said region.

Furthermore, the method according to this invention is also useful for an incumbent operator since, as was mentioned previously herein, although tools based on detailed plant records are available, said tools do not allow a dynamic monitoring of incidences. The method of the present invention allows a dynamic monitoring of the possible variations in the access speed, enabling a pro-active maintenance of the broadband services supported on the metal pairs.

The operations necessary for the method of the present invention are carried out at a single point (for example, the telephone exchange), thus preventing technicians from having to travel to the client's home, with the consequent saving in resources and time.

**Claims**

1. Method for predicting the performance of a broadband access loop (1), comprising:

    - measuring a reflection coefficient of the loop (1);
    - determining a topology of the loop (1) from the reflection coefficient;
    - estimating a raw data rate of the loop (1);
    - estimating a net data rate of the loop (1) from the topology and the raw data rate of the loop (1).

2. Method for predicting the performance according to claim 1, which further comprises compensating in the reflection coefficient the effect of the analogue front end circuit (2) of modems connected to the loop (1), the effect of the exchange splitter (3) and the effect of pulses used by an asymmetric digital subscriber line access multiplexer to measure the reflection coefficient.

3. Method for predicting the performance according to any of the previous claims, wherein the step of determining a topology of the loop (1) from the reflection coefficient comprises in turn.

    - determining the frequency minimums of the reflection coefficient;
    - for each minimum, determining the length of a bridged tap (4) as

$$\beta\left(f\right) \cdot L_{RM} = \pi \,,$$

where $L_{RM}$ is the length of the bridged tap (4), and where $\beta$(f) is the phase function of the loop (1) at the frequency at which the minimum is detected;

- calculating an inverse Fourier transform of the reflection coefficient;
- obtaining the position of the bridged taps and the total length of the loop (1) from the maximums of said inverse Fourier transform.

4. Method for predicting the performance according to any of the previous claims, wherein the raw data rate of the loop (1) is estimated using a value of noise power per subcarrier measured by the asymmetric digital subscriber line access multiplexer.

5. Method for predicting the performance according to any of claims 1 to 3, wherein the raw data rate of the loop (1) is estimated using a value of noise power per subcarrier estimated from background noise levels applied by an operator of the loop (1).

6. Method for predicting the performance according to any of the previous claims, wherein the reflection coefficient is measured with an asymmetric digital subscriber line access multiplexer from a single point of access to the network, said single point of access being a telephone exchange.


**Patentansprüche**

1. Verfahren zur Vorhersage der Leistung einer Breitband-Anschlussleitung (1), das Folgendes umfasst:

   - Messen eines Reflexionsfaktors der Leitung (1);
   - Bestimmen einer Topologie der Leitung (1) von dem Reflexionsfaktor;
   - Schätzen einer Rohdatenrate der Leitung (1);
   - Schätzen einer Nettodatenrate der Leitung (1) von der Topologie und der Rohdatenrate der Leitung (1).

2. Verfahren zur Vorhersage der Leistung nach Anspruch 1, das ferner das Ausgleichen der Auswirkung der analogen Eingangsschaltung (2) von Modems, die mit der Leitung (1) verbunden sind, der Auswirkung des Splitters (3) der Vermittlungsstelle und der Auswirkung von Impulsen, die durch einen Zugangsmultiplexer der asymmetrischen digitalen Teilnehmerleitung verwendet werden, um den Reflexionsfaktor zu messen, im Reflexionsfaktor umfasst.

3. Verfahren zur Vorhersage der Leistung nach einem der vorhergehenden Ansprüche, wobei der Schritt des Bestimmens einer Topologie der Leitung (1) von dem Reflexionsfaktor der Reihe nach Folgendes umfasst:

   - Bestimmen der Frequenzminima des Reflexionsfaktors;
   - für jedes Minimum, Bestimmen der Länge einer Stichleitung (4) als:

$$\beta(f) \cdot L_{RM} = \pi \,,$$

   wo $L_{RM}$ die Länge der Stichleitung (4) ist und wo $\beta(f)$ die Phasenfunktion der Leitung (1) bei der Frequenz ist, bei der das Minimum ermittelt wird;
   - Berechnen einer inversen Fourier-Transformation des Reflexionsfaktors;
   - Erhalten der Position der Stichleitungen und der Gesamtlänge der Leitung (1) von den Maxima der inversen Fourier-Transformation.

4. Verfahren zur Vorhersage der Leistung nach einem der vorhergehenden Ansprüche, wobei die Rohdatenrate der Leitung (1) unter Verwendung eines Werts der Rauschleistung pro Zwischenträger geschätzt wird, die durch den Zugangsmultiplexer der asymmetrischen digitalen Teilnehmerleitung gemessen wird.

5. Verfahren zur Vorhersage der Leistung nach einem der Ansprüche 1 bis 3, wobei die Rohdatenrate der Leitung (1) unter Verwendung eines Werts der Rauschleistung pro Zwischenträger geschätzt wird, der von Hintergrundrauschpegeln geschätzt wird, die durch einen Betreiber der Leitung (1) angewandt werden.

6. Verfahren zur Vorhersage der Leistung nach einem der vorhergehenden Ansprüche, wobei der Reflexionsfaktor mit einem Zugangsmultiplexer der asymmetrischen digitalen Teilnehmerleitung von einem einzelnen Zugangspunkt zu dem Netz gemessen wird, wobei der einzelne Zugangspunkt eine Telefon-Vermittlungsstelle ist.

**Revendications**

1. Procédé de prédiction de performance d'une boucle d'accès à bande large(1), comportant :

   - Mesurer un coefficient de réflexion de la boucle (1) ;
   - Déterminer une topologie de la boucle (1) à partir du coefficient de réflexion ;
   - Estimer un débit de données brut de la boucle (1) ;
   - Estimer un débit de données net de la boucle (1) à partir de la topologie et du débit de données brut de la boucle (1).

2. Procédé de prédiction de performance selon la revendication 1, comportant en outre l'étape de compenser dans le coefficient de réflexion l'effet de circuit frontal (2) analogique de modems connectés à la boucle (1), l'effet du filtre d'échange (3) et l'effet des impulsions utilisées par un multiplexeur d'accès à une liaison numérique asymétrique d'abonné pour mesurer le coefficient de réflexion.

3. Procédé de prédiction de performance selon l'une des revendications précédentes, dans lequel l'étape de détermination de la topologie de la boucle (1) à partir du coefficient de réflexion comporte en boucle :

   - Déterminer des minimums de fréquence du coefficient de réflexion ;
   - Pour chaque minimum, déterminer la longueur d'un point de raccordement (4) selon

   $$\beta(\text{f}).L_{rm} = \pi \, ,$$

   - Dans lequel $L_{rm}$ est la longueur du point de raccordement (4), et dans lequel $\beta(f)$ est la fonction de phase de la boucle (1) à la fréquence à laquelle le minimum est détecté ;
   - Calculer une transformée de Fourier inversée du coefficient de réflexion ;
   - Obtenir la position du point de raccordement et la longueur totale de la boucle (1) à partir des maximums desdites transformée de Fourier inversées.

4. Procédé de prédiction de performance selon l'une des revendications précédentes, dans lequel le débit de données brut de la boucle (1) est estimé en utilisant une valeur de puissance de bruit par sous-porteuse mesurée par le multiplexeur d'accès à une liaison numérique asymétrique d'abonné.

5. Procédé de prédiction de performance selon l'une des revendications 1 à 3, dans lequel le débit de données brut de la boucle (1) est estimé en utilisant une valeur de puissance de bruit par sous-porteuse estimé à partir du niveau de bruit de fond appliqué par un opérateur de la boucle.

6. Procédé de prédiction de performance selon l'une des revendications précédentes, dans lequel le coefficient de réflexion est mesuré avec un multiplexeur d'accès à une liaison numérique asymétrique d'abonné à partir d'un unique point d'accès au réseau, ledit point d'accès au réseau étant un filtre téléphonique.

*FIG. 1*

EP 2 499 785 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1842292 A
- US 2008089485 A
- US 2007013384 A
- US 20020089337 A
- EP 1248383 A

### Non-patent literature cited in the description

- **C. E. SHANNON.** A mathematical theory of communication. *Bell System Technical Journal,* July 1948, vol. 27, 379-423623-656